# EUROPEAN PATENT APPLICATION

(11) **EP 4 625 940 A1**
(43) Date of publication of application: **01.10.2025**
(21) Application number: 25166735.8
(22) Date of filing: 27.03.2025
(51) Int. Cl.: H04L 61/4511, H04L 61/58, H04L 61/4552, H04L 101/69

(54) **DNS CATEGORIZATION CACHE PROVISION**

(30) Priority: 28.03.2024 IN 202441025246; 25.07.2024 US 202418783728
(71) Applicant: Cambium Networks Ltd, Ashburton, Devon TQ13 7UP (GB)
(72) Inventor: ATREYA, Vivek Lakshminarayana, 560037 Bangalore (IN); ANKAIAH, Shashi Hosakere, 560037 Bangalore (IN); MIRANDA, Trevor, Rolling Meadows, 60008 (US); Chaudhary, Vaibhav, 60008 Rolling Meadows (IN)
(74) Representative: EIP

(57) **Abstract**

Methods and systems are provided for enabling network edge devices to perform domain name categorization and filtering. DNS requests are received from two or more network edge devices, including a first associated with a first geographic characteristic and a second associated with a second geographic characteristic. First and second domain name caches are generated for DNS requests associated with the first and second geographic characteristic respectively. Each record in the first and second domain name caches associates a respective domain name with a respective DNS resolution and a respective category. A request is received from a third network edge device, associated with a third geographic characteristic, and one of the first or second domain name caches is selected and transmitted to the third network edge device.

## Description

### Technical Field

The present invention relates generally to the field of computer networks and, more specifically, to systems and methods for enabling network edge devices to perform domain name categorization and filtering.

### Background

In today's networked world, user devices frequently need to access resources, such as web pages, applications, and services, which are hosted on other devices accessible over wide area networks, such as the internet. Domain name requests are processes by which user devices may interact with the Domain Name System (DNS) to resolve domain names into IP addresses. This is typically done by the user's device sending a domain name request over a network to a DNS server, which determines a respective Internet Protocol (IP) address, through domain name resolution, and provides the same to the user device. This enables the user device to establish a connection with a web server hosting the requests resource, such as a website or service.

Domain names are fundamental to this process. They are human-friendly identifiers for devices on the network, such as servers hosting the desired resources. A domain name system (DNS) server is usually responsible for translating these domain names into Internet Protocol (IP) addresses, which are machine-friendly identifiers that can be used to route data over a network to the correct device.

### Summary of Invention

According to a first aspect of the present disclosure, there is provided a system for enabling network edge devices to perform domain name categorization and filtering, the system comprising at least one processor and storage on which is stored computer-executable instructions which, when executed by the at least one processor, cause the system to: receive domain name system (DNS) requests from two or more network edge devices, including a first network edge device associated with a first geographic characteristic and a second network edge device associated with a second geographic characteristic; generate a first domain name cache for DNS requests associated with the first geographic characteristic, the first domain name cache including a first plurality of records, each record of the first plurality of records associating a domain name with a respective DNS resolution and a respective category; generate a second domain name cache for DNS requests associated with the second geographic characteristic category, the second domain name cache including a second plurality of records, each of the second plurality of records associating a respective domain name with a respective DNS resolution and a respective category; receive a request from a third network edge device, the request including an indication of a third geographic characteristic associated with the third network edge device; select one of the first domain name cache or the second domain name cache based on a comparison of the third geographic characteristic with the first geographic characteristic and the second geographic characteristic; and transmit the selected domain name cache to the third network edge device.

According to a second aspect of the present disclosure, there is provided a method for enabling network edge devices to perform domain name categorization and filtering, the method comprising: receiving domain name system (DNS) requests from two or more net-work edge devices, including a first network edge device associated with a first geographic characteristic and a second network edge device associated with a second geographic characteristic; generating a first domain name cache for DNS requests associated with the first geographic characteristic, the first domain name cache including a first plurality of records, each record of the first plurality of records associating a domain name with a respective DNS resolution and a respective category; generating a second domain name cache for DNS requests associated with the second geographic characteristic, the second domain name cache including a second plurality of records, each of the second plurality of records as-sociating a respective domain name with a respective DNS resolution and a respective category; receiving a request from a third network edge device, the request including an indication of a third geographic characteristic associated with the third network edge device; selecting one of the first domain name cache or the second domain name cache based on a comparison of the third geographic characteristic with the first geographic characteristic and the second geographic characteristic; and transmitting the selected domain name cache to the third network edge device.

According to a third aspect of the present disclosure, there is provided a non-transitory computer-readable storage medium comprising computer executable instructions which, when executed by a processor, cause the processor to: receive domain name system (DNS) requests from two or more network edge devices, including a first network edge device associated with a first geo-graphic characteristic and a second network edge device associated with a second geographic characteristic; generate a first domain name cache for DNS requests associated with the first geographic characteristic, the first domain name cache including a first plurality of records, each record of the first plurality of records associating a domain name with a respective DNS resolution and a respective category; generate a second domain name cache for DNS requests associated with second geographic characteristic, the second domain name cache including a second plurality of records, each of the second plurality of records associating a respective domain name with a respective DNS resolution and a respective category; receive a request from a third network edge device, the request including an indication of a third geographic characteristic associated with the third network edge device; select one of the first domain name cache or the second domain name cache based on a comparison of the third geographic characteristic with the first geographic characteristic and the second geographic characteristic; and transmit the selected domain name cache to the third network edge device.

### Brief Description of the Figures

Examples of the invention will now be described with reference to the accompanying drawings:
Figure 1 is a schematic diagram showing a network edge device performing DNS categorization and resolution for a client device;
Figure 2 is a schematic diagram showing a system for enabling network edge devices to perform domain name categorization and filtering according to examples;
Figure 3 is a flow diagram showing a method of enabling network edge devices to perform domain name categorization and filtering according to examples;
Figure 4 is a schematic diagram showing the method of enabling network edge devices to perform domain name categorization and filtering according to examples;
Figure 5 is a schematic diagram showing a procedure for generating a domain name cache according to examples;
Figure 6 is a schematic diagram showing a method of enabling network edge devices to perform domain name categorization and filtering according to examples;
Figure 7 is a schematic diagram showing hierarchically arrange attributes for a plurality of geographic characteristics according to examples;
Figure 8 is a schematic diagram showing examples of a first domain name cache and a second domain name cache according to examples; and
Figure 9 is a schematic diagram showing a non-transitory computer-readable storage medium according to examples.

### Detailed Description

Wireless-Fidelity (Wi-Fi) networks are used in various environments, including homes, businesses, educational institutions, government organisations, public services, and others. Wi-Fi networks are wireless local area networks (WLAN) that use radio waves to connect devices to each other, and the internet. Wi-Fi is a technology that allows electronic devices like computers, smartphones, and tablets to exchange data wirelessly over a computer network, including high-speed internet connections.

Wi-Fi networks are managed through a combination of hardware devices and software protocols to ensure efficient and secure wireless communication. Wireless Routers and Access Points (APs) are the physical devices that manage the wireless network. Routers and access points control the distribution of data between devices on the local network and the wider internet. They transmit and receive data using radio frequency signals. Some routers and access points allow administrators to manage the network remotely, providing flexibility in configuration and troubleshooting.

One challenge in managing network traffic is the filtering of domain name requests. This is important for a number of reasons, such as to prevent access to certain types of content, for security reasons, to comply with regulations, or to manage network bandwidth. Such filtering may be based on particular categories of requested domain names. The category of a given domain name may indicate, for example, the type of content associated with the domain name, a service provided at the domain, or its security characteristics.

However, determining a category for each requested domain name can be time-consuming and can add a significant delay to the process of accessing a resource. This delay can be particularly noticeable for user devices, which may have to wait for data indicating the domain name category to be received before they can access a resource. Due to the large number of domain names that are in use, categorization of domain names may be offered as a cloud-based service. Storing, updating, and maintaining a database that can be used to determine a category of a given domain name is computationally and resource intensive, and hence impractical to implement in a Wi-Fi network, such as that deployed in a home, business, or educational institute.

Moreover, current methods for managing domain name requests are typically reactive in nature. They wait for a user device to send a domain name request, then obtain the categorization data and filter the request accordingly. This reactive approach can be inefficient and can result in significant delays in accessing resources.

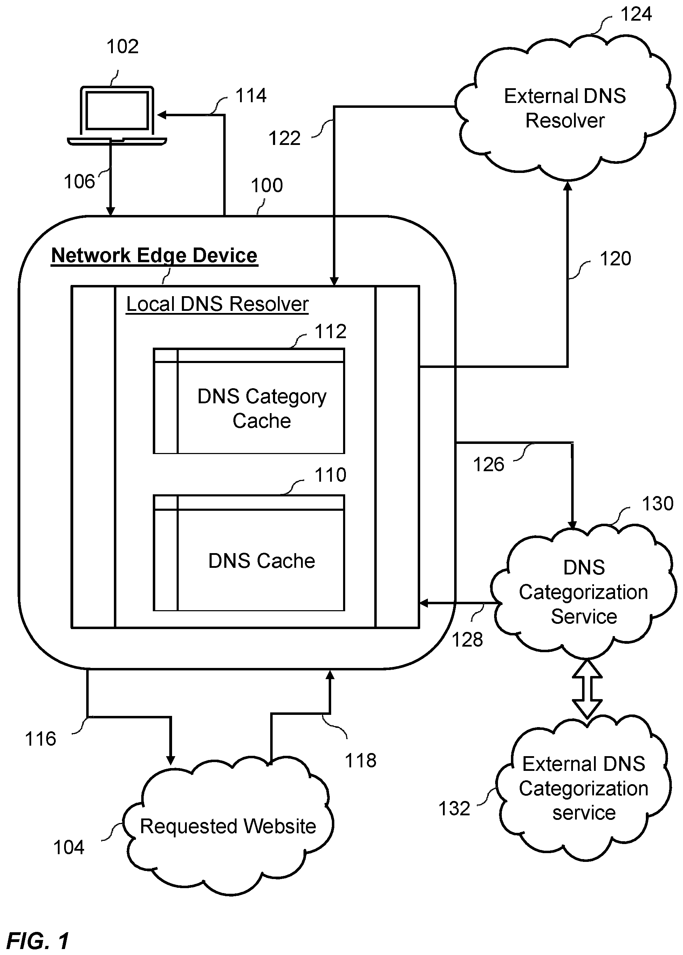

Figure 1 depicts the function of a network edge device 100, such as a router or LAN controller, that is configured to perform DNS categorization. A client device 102 attempts to connect to a website 104 by sending a DNS request 106 to the network edge device 100 based on a domain name associated with the website. If the network edge device 100 includes a DNS resolution for the requested domain name in a DNS cache 110, then a filtering policy is applied based on a category of the requested domain name, which is determined from associated DNS categorization data stored in a DNS category cache 112. The network edge device 100 may then provide 114a DNS response to the client device 102, including the DNS resolution, if the filtering policy allows. The client device 102 may then communicate 116 and 118 with the requested website 104.

If either of the DNS category cache 112 or the DNS cache 110 do not include the relevant information for the requested domain name, referred to as a "cache miss", then the network edge device 100 performs additional steps to obtain the relevant DNS resolution and categorisation data.

If the DNS cache 110 does not include a DNS resolution or the requested domain name, the network edge device 100 communicates 120 and 122 with an external DNS resolver 124 to obtain a DNS resolution. If the DNS category cache 112 does not include the relevant categorisation information for the requested domain name, the network edge device 100 communicates 126 and 128 with a DNS categorization service 130. In some cases, the DNS categorization service 130 will communicate with a further external categorization service 132 if is not able to provide the categorisation information locally.

Cache misses that cause the network edge device 100 to communicate with either the external DNS resolver 124 or the DNS categorization server 130 typically cause significant latency. The external DNS resolver 124 or the DNS categorization service 130 are often accessible via an external, or wide-area, network. These calls out of the local network are a source of increased latency when handling DNS requests for client devices 102.

After handling a request from the client device 102, the network edge device 100 will generally store the resulting DNS resolution and categorization information in the DNS cache 110 and DNS category cache 112. In this way the information stored in the DNS cache 110 and the DNS category cache 112 can be updated and/or increased over time. However, it has been found that there are surprising limitations on these techniques.

On install, or initial boot up, of a network edge device 100, the DNS cache 110 and the DNS category cache 112 are empty. As such, the performance of the network edge device 100 is significantly hindered until a sufficient number of requests have been received from client device 102, such that the contents of the DNS cache 110 and DNS category cache 112 correlate with common DNS requests from client devices 102.

Additionally, there are limitations on the practical size of the DNS cache 110 and the DNS category cache 112. Network edge devices 100 are deployed in a variety of facilities, and at a variety of scales. In many applications, there are limitations on the hardware resources, such as storage or memory, that can be provided in the network edge devices 100. This makes it impractical to pre-load the DNS cache 110 or the DNS category cache 112 with significant additional storage capacity that would allow an extensive cache suitable for all possible DNS requests to be preloaded onto the network edge device 100.

These limitations are compounded due to the increasing number, and frequency, of DNS requests that client devices send during normal operation, such as web-browsing. These limitations are also exaggerated due to the fast pace at which new domain names are generated and/or changed. When a particular web page is requested by a client device 102, a plurality of additional domain name requests may be automatically sent to access specific additional resources which may be needed to load the web page. For example, a single web page may include a plurality of embedded content links which are used to access and load content which is subsequently displayed with the web page to the client device 102. This may include videos, images, web-based applications, and the like. Other domain name requests are initiated by background processes needed to load the webpage and any additional services associated therewith, such as security, encryption, analytics, and other such services.

Certain examples described herein, provide systems and methods for generating DNS caches that can be provided to network edge devices on install, or initial bootup, that include adaptive DNS resolution and categorization information. The system is configured to receive, or obtain, DNS requests across a plurality of geographic regions and to generate region specific DNS caches. A new network edge device can request a DNS cache from the system, and the system is capable of selecting a suitable DNS cache and providing the same to the new network edge device. Additional techniques for selecting and generating these DNS resolution caches are also provided.

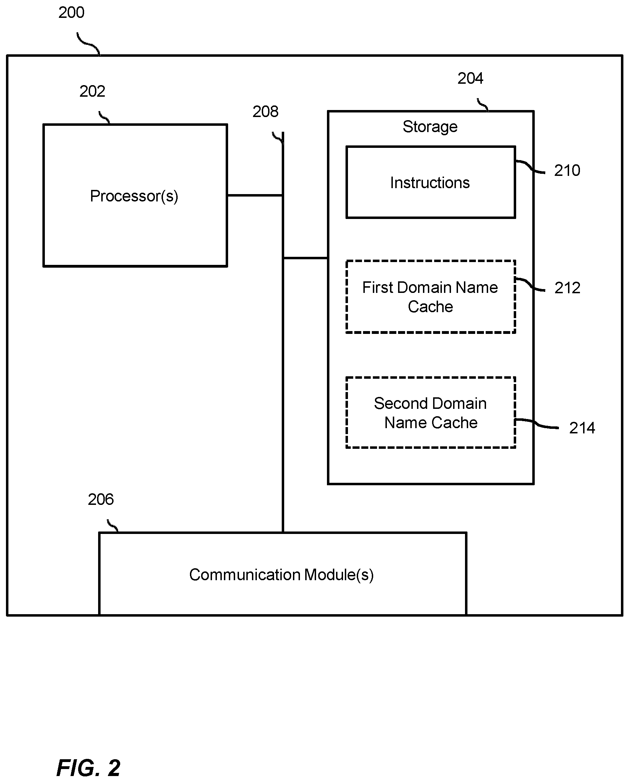

Figure 2 depicts a system 200 for enabling network edge devices 100 to perform domain name categorization and filtering. The system 200 comprises at least one processor 202, storage 204, and communication module(s) 206. The processor(s) 202, storage 204, and communication module(s) 206 are connected over a communication channel, such as a bus 208, allowing them to communicate with each other.

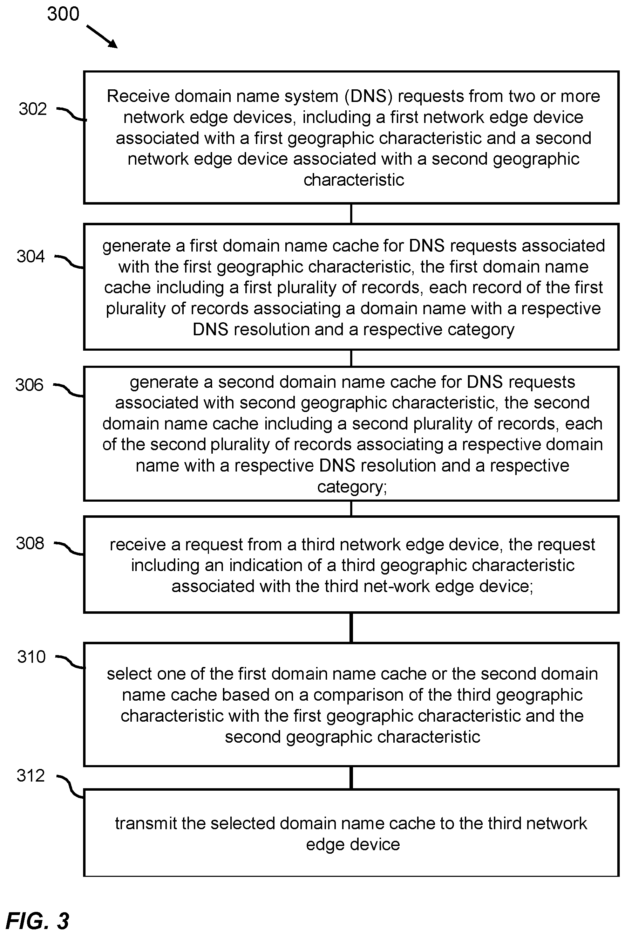

The storage 204 stores a set of computer-executable instructions 210 for executing a method 300, which will be described further below with respect to Figures 3 to 8. The storage 204 may also be suitable for storing other types of data such as a first domain name cache 212 and/or a second domain name cache 214, as will be described further below. The storage 204 includes any suitable combination of volatile and non-volatile storage, for example, a combination of read-only memory (ROM) and one or more types of random-access memory (RAM), such as dynamic RAM, synchronous RAM, and so forth. ROM may be included in the form of both disc-based (e.g., hard drive) or flash memory (e.g., solid-state drive(s)).

The processor(s) 202 include any suitable combination of processing circuitry configured to execute the instructions 210. The processor(s) 202 may include one or more general purpose processors, such as central processing units (CPU), and/or application specific processing circuitry or processing units. The one or more communications modules 206 are configured to enable communication with one or more further computing devices, for example, as part of a network. The communications module(s) 206 may comprise wireless and/or wired communications modules. These communications modules 106 may implement known protocols and standards such as Wi-Fi, Bluetooth, Ethernet, and so forth.

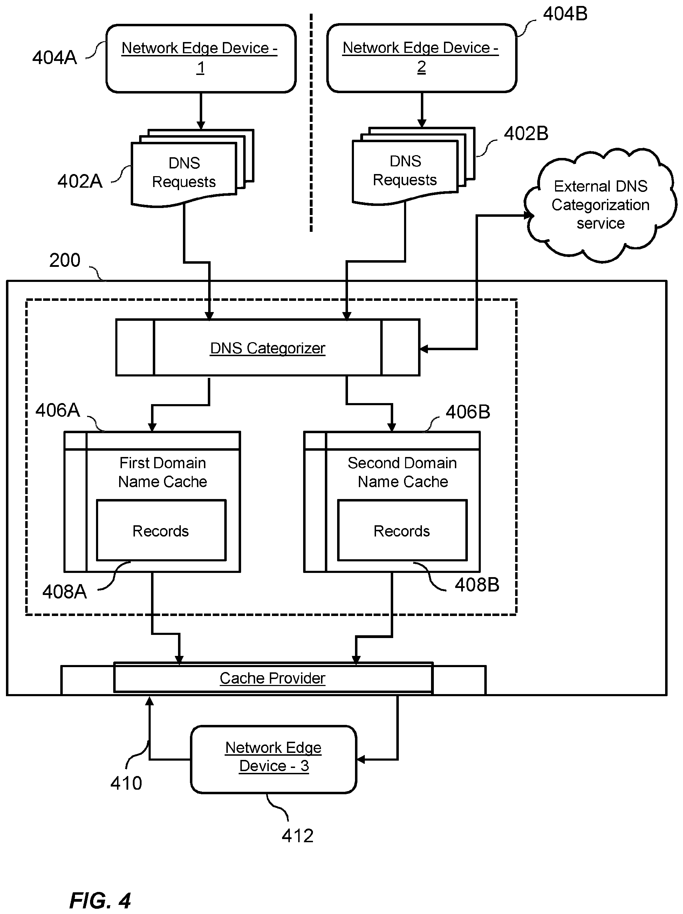

Turning to Figures 3 and 4, the method 300 implemented by the system 200, according to the instructions 210, will now be described. The system 200 receives 302 DNS requests 402A and 402B from two or more network edge devices, including a first network edge device 404A and a second network edge device 404B. These network edge devices 404A and 404B are configured to facilitate communication between client devices, connected in a local network, with resources hosted by remote computing devices, such as websites.

The DNS requests 402A and 402B received from the network edge devices 404A and 404B include DNS requests that client devices have sent to those network edge devices 404A and 404B. For example, the DNS requests 402A received from the first network edge device 404A are representative of DNS requests sent by client devices connected to the first network edge device 404A. Similarly, the DNS requests 402B received from the second network edge device 404B are representative of DNS requests sent by client devices connect to the second network edge device 404B.

The first network edge device 404A is associated with a first geographic characteristic and the second network edge device 404B is associated with a second geographic characteristic. A geographic characteristic may include an indication of a country, state, city, a town, an economic zone, a custom region, or any combination of these. The geographic characteristics associated with network edge devices may be referred to as the locations, or geographic locations, of the network edge devices.

The first geographic characteristic and the second geographic characteristic may be different. Where the first and second geographic characteristic are different, the indication of least one of a country, state, city, town, economic zone, or custom region of the first geographic characteristic may be different to a corresponding indication of the second geographic characteristic. For example, the first and second geographic characteristics may each include an indication of the same county, such as the United States, but also include indications of different states, such as California and Texas.

The system 200 generates 304 a first domain name cache 406A for DNS requests associated with the first geographic characteristic. The first domain name cache 406A includes a first plurality of records 408A that each associate a domain name with a respective DNS resolution and a respective category. The first domain name cache 406A is generated 304 based on the DNS requests 402A received from the first network edge device 404A. In this way, the first plurality of domain names 408A corresponds to DNS requests that are likely to be received from client devices associated with the first geographic characteristic.

The system 200 also generates 306 a second domain name cache 406B for DNS requests associated with the second geographic characteristic. The second domain name cache 406B includes a second plurality of records 408B that each associate a domain name with a respective DNS resolution and a respective category. The second domain name cache 406B is generated 306 based on the DNS requests 402B received from the second network edge device 404B. In this way, the second plurality of domain names 408B correspond to DNS requests that are likely to be received from client devices associated with the second geographic characteristic.

Determining which of the DNS requests 402A and 402B are associated with the first geographic characteristic and which of the DNS requests 402A and 402B are associated with the second geographic characteristic may involve monitoring from which network edge device 404A or 404B the DNS requests 402A and 402B are received. In other examples, the DNS requests 402A and 402B may include an indication of a geographic characteristic. In some examples, the indication of the geographic characteristic may be a GeolP. In this case, the system 200 may be capable of sorting the DNS requests 402A and 402B based on a comparison of the respective GeoIP with the first and/or second geographic characteristics.

A request 410 is received 308 from a third network edge device 412. The third network edge device 412 may be a newly installed or re-booted network edge device that sends a request to the system 300 to be provided with a domain name cache 406A or 406B. The request 410 includes an indication of a third geographic characteristic associated with the third network edge device 412. The third geographic may similarly include an indication of any of a country, state, city, a town, an economic zone, a custom region, or any combination of these. The indication of the third geographic characteristic may be a GeoIP, or an indication of an access network via which the request 410 is received.

The system 300 compares the third geographic characteristic with the first and second geographic characteristics, and uses this comparison to select 310 one of the first domain name cache 406A or the second domain name cache 406B. For example, where the third geographic characteristic matches the first geographic characteristic the first domain name cache 406A is selected. Alternatively, if the third geographic characteristic matches the second geographic characteristic the second domain name cache 406B is selected 310.

The selected domain name cache, being either of the first 406A or second 406B domain name caches, is then transmitted 312 to the third network edge device 412. The third network edge device 412 is thereby provided with a domain name cache that is capable of mitigating the likelihood of cache misses, when implementing DNS resolution and categorization functions for client devices in its respective local network. The third network edge device 412 may implement its own categorization and DNS resolution function, similar to those described in with respect to Figure 1, and therefore continually update cache once stored locally on the third network edge device 412.

While it may be possible to provide a single domain name cache to network edge devices in a variety of geographic locations, providing a geographically adaptive domain name cache quickly reduces the initial likelihood of cache misses for the third network edge device. It is also possible to do so with limited domain name cache sizes, and therefore with lower resource expenditure than providing an extensive domain name cache that was suitable for all possible domain name requests from client devices. It has surprisingly been found that geographic variation in DNS request probabilities can be leveraged to generate efficient and functional domain name caches even in circumstances where the overall size of the caches may be limited. In this way it becomes possible to reduce network latency for client devices connected to the third network edge device 412 and without requiring increased hardware or software resources to be provided in the third network edge device 412.

It is to be appreciated that the first domain name cache 406A and the second domain name cache 406B may include at least one common record. Client devices in a first location, associated with the first geographic characteristic, and client devices in a second location, associated with the second geographic characteristic, may request to access the same website. In this case, the first network edge device 404A and the second network edge device 404B may each send DNS requests to the system 200 that are associated with a domain name for the same website.

Where the first network edge device 404A and the second network edge device 404B are in close geographical proximity, the domain name caches 406A and 406B may be expected to include a large proportion of overlapping domain names. This is due to the cultural and habitual similarity that can often occur between users of client devices that are closely located. For example, the websites visited by users in Los Angeles, California, may be similar to those websites visited by users in San Diego, California.

In contrast, where the first network edge device 404A and the second network edge device 404B are not in close geographical proximity, the domain name caches 406A and 406B may be expected to include a smaller proportion of overlapping domain names. For example, the websites visited by users in Los Angeles, California, may be substantially different to the websites visited by users in Delhi, India. Aside from the cultural differences and habits of users in these two locations, certain services available in both the United States and India, may host these services on regional servers associated with respective, region dependent, domains.

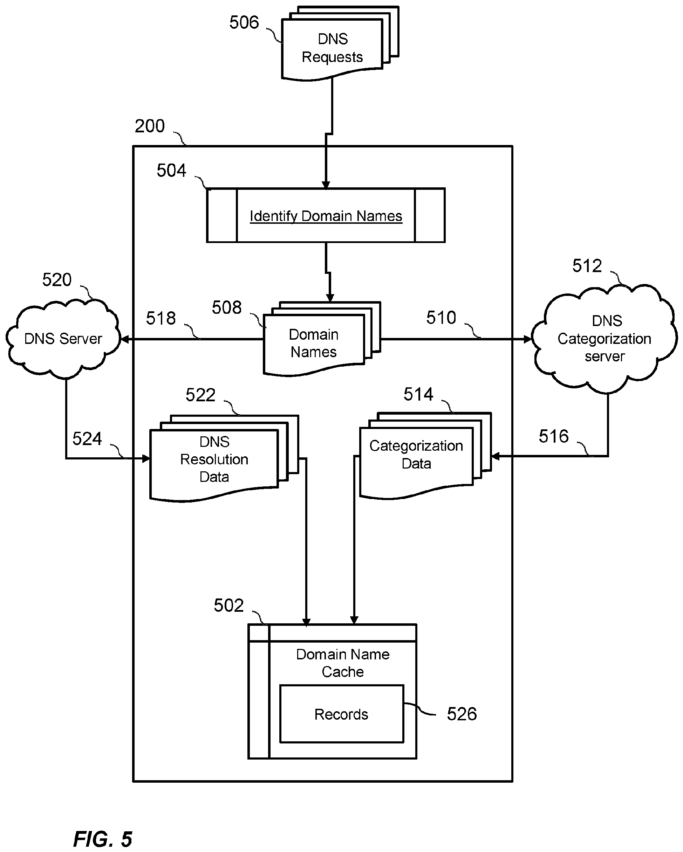

An example of a procedure for generating 304 or 306 a domain name cache 406A or 406B will now be described with respect to Figure 5. It is to be appreciated that the example of Figure 5 may be used to generate either, or both, of the first domain name cache 406A and the second domain name cache 406B. According to the example shown in Figure 5, generating 304 or 306 a domain name cache 502 involves processing 504 DNS requests 506 associated with a respective geographic characteristic to identify a plurality of domain names 408. One ore more requests 510 for domain name categorization are transmitted to a domain name categorization server 512 to determine a respective category for each of the plurality of domain names 508. The DNS categorization server 512 responds with categorization data 514, received 516 by the system 200. The categorization data 514 includes an indication of one or more DNS categories for each of the plurality of domain names 508.

One or more requests 518 for domain name resolution are transmitted to a DNS server 520 to determine a domain name resolution, such as an IP address, for each of the plurality of domain names 508. The DNS server 520 responds with a DNS resolution data 522, received 524 by the system 200. The DNS resolution data 522 includes a DNS resolution for each of the plurality of domain names 508. The plurality of domain names 508 may then be stored in the domain name cache 502, in association with the respective categorization data 514 and DNS resolution data 522. Each record 526 may correspond to a respective domain name of the plurality of domain names and include a DNS resolution, and an indication of one or more DNS categories, associated with the domain name. This example procedure may be used to generate either of the first domain name cache 406A or the second domain name cache 406B. It is to be appreciated that the steps involved in this procedure for generating a domain name cache 502 may be performed in an order different to that described above. For example, the requests 518 may be sent to the DNS server 520 before, or concurrently with, sending the requests 510 to the DNS categorization server 512.

Generating 304 or 306 a domain name cache 502 may involve filtering the received DNS requests. For instance, the system 200 may process the DNS requests 506 received from a network edge device and remove duplicate DNS requests. In this context, two or more DNS requests are duplicates where they are associated with the same domain name. In some cases, the DNS requests 506 received from a network edge device may represent all DNS requests that the network edge device receives from client devices its local networks. Removing duplicate DNS requests reduces the computational expense of performing DNS resolution and categorization, and also enables a larger number of domain names to be represented in the domain name cache 502.

The size, or storage capacity, of a domain name cache 502 may be configured to correspond to the storage capacity of the network edge devices to which it can be provided by the system 200. Where the size of a domain name cache 502 is limited, the system 200 may prioritize the most popular domain names when generating the domain name cache 502. To this end, the system 200 may score, or rank, domain names associated with the received DNS requests 506. Generating the domain name cache 502 may then prioritize selecting the highest ranked domain names. This domain name prioritisation may be applied when generating either of the first domain name cache 406A and the second domain name cache 406B.

In other examples, a network edge device may send a subset of all of the DNS requests it receives from client devices to the system 200. In this way, the DNS requests are filtered locally, at the network edge devices, and the DNS requests 506 sent to the system 200 are the most popular DNS requests for that respective network edge device. Where a network edge device implements the functionality described above with respect to Figure 1, and so is able to manage and populate local DNS caches, the DNS requests 506 received from this network edge device may correspond to the local cache of that network edge device.

In some examples, once the second domain name cache 406B has been generated based on the DNS requests 402B it may comprise fewer than a predetermined number of domain names, or records. For example, the predetermined number may correspond to the storage size of the second domain name cache 406B. If the second domain name cache 406B has fewer than this predetermined number, in other words if it is not full, then the method 300 may further comprise selecting one or more domain names from the first plurality of domain names for inclusion in the second domain name cache 406B. In this way, additional records can be included in the second domain name cache 406B that provide further resiliency to potential cache misses. The first plurality of domain names may be used to select the additional domain names based on a geographic proximity or other relevant characteristic.

As described briefly above, domain names may be ranked or scored based on their popularity. The first plurality of domain names may each be associated with a respective popularity score representative of a number of DNS requests inducing the respective domain name. In this case, selecting domain names from the first plurality of domain names to be included in the second domain name cache may prioritize domain names based on their respective popularity scores.

In the examples described so far, the DNS requests 402A and 402B received from the first network edge device 404A and the second network edge device 404B include an indication of a respective domain name. In other examples, any one or more of the DNS requests 402A and 402B may include an indication of a domain name and a respective category for the domain name. Where the first network edge device 404A or the second network edge device 404B is a network edge device 100 like that described with respect to the Figure 1, they may perform their own DNS categorization and prefetch in the event of a cache miss. In this case, providing an indication of a category for the respective domain name in a DNS request 402A or 402B sent to the system 200 may enable the system 200 to skip performing DNS categorization for that domain name.

While a single network edge device 406A and 406B is shown for each location, it is to be appreciated that the system 200 may receive DNS requests from a plurality of network edge devices associated with the a given location. By generating a domain name cache 406A or 406B based on DNS requests received from a plurality of network edge devices associated with a given geographic characteristic, or location, the resulting domain name cache 406A or 406B may be adapted to handle DNS requests that are likely to be received across a region associated with the geographic characteristic. For example, where the first geographic characteristic includes an indication of a given city, the DNS requests 402A may be representative of DNS requests made by client devices throughout the city, rather than DNS requests from client devices in a single local network within that city.

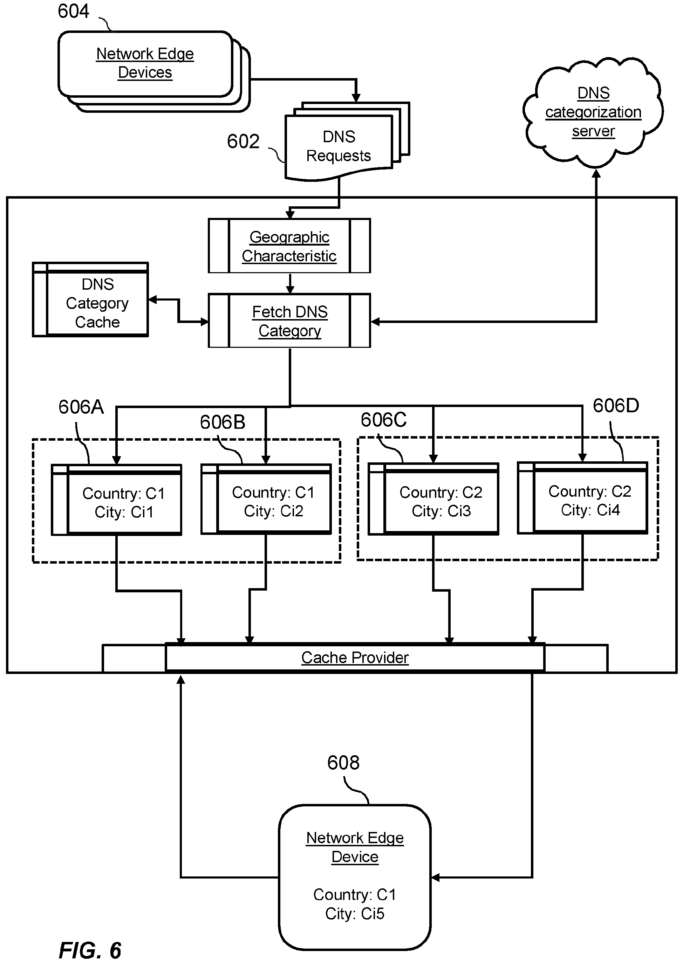

The system 200 may be configured to generate domain name caches for a large number of varying geographic characteristics. Figure 6 shows an example in which DNS requests 602 are received from a plurality of network edge devices 604 including at least four network edge devices associated with different geographic characteristics. The system 200 may process these DNS requests 602 as described above and thereby generate at least four domain name caches 606A to 606D each associated with a respective geographic characteristic. In this example, two of the domain name caches 606A and 606B are associated with the same country, C1, but different cities, Ci1 and Ci2 respectively. Similarly, two further domain name caches 606C and 606D are associated with a common country C2, that is different to C1, and different cities Ci3 and Ci4 respectively.

If a geographic characteristic associated with a network edge device 608, that is requesting a domain name cache, does not match the geographic characteristic associated with any of the domain name caches 606A to 606D generated by the system 200, selecting a domain name cache 606A to 606D may be dependent on a similarity of the geographic characteristic of the requesting network edge device 608 with the geographic characteristics associated with the domain name caches 606A to 606D. In this way, even if the system 200 does not include a domain name cache that directly corresponds to the geographic characteristic of the requesting network edge device 608 it is possible to identify and provide the most suitable domain name cache for that network edge device 608.

As discussed above, the geographic variability in DNS request probability and usage may be correlated with the cultural and/or habitual differences between users in different geographic locations. Even if an exact match of geographic location cannot be made, identifying and providing a domain name cache that is associated with a geographic characteristic that is close to the geographic characteristic of the network edge device 608 is still capable of mitigating the frequency of cache misses for the network edge device 608.

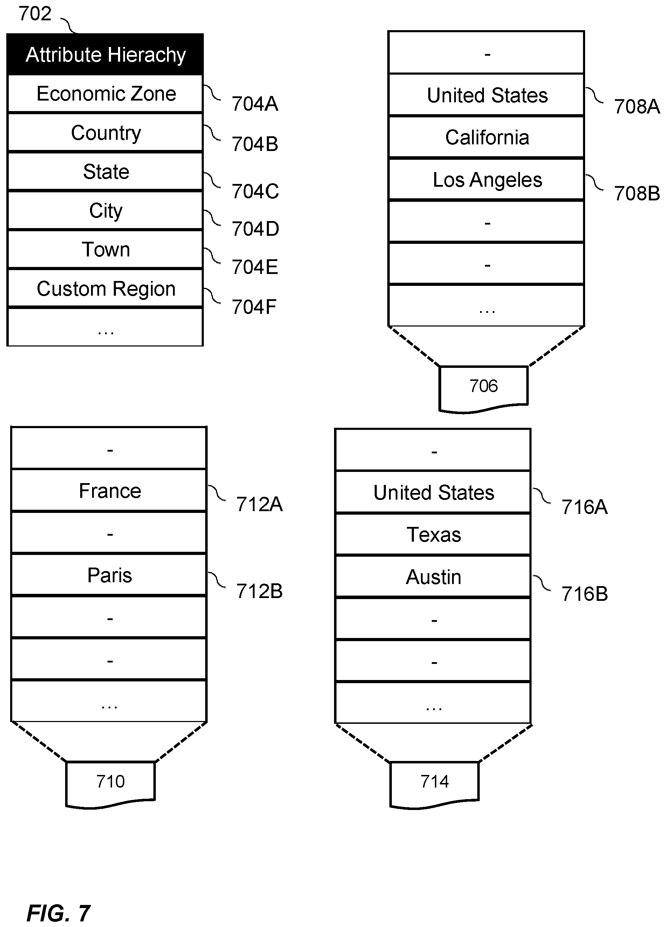

In some examples, the geographic characteristics may include indications of two or more attributes arranged in a hierarchy wherein different attributes are associated with different precision. Figure 7 shows an example of an attribute hierarchy definition 702 in which different attributes 704A to 704F are associated with different precisions. In the example shown, the economic zone 704A is the coarsest level of precision of the attributes, and the custom region 704F is the finest level of precision of the attributes. The position of the other attributes 704B to 704E is indicative of their relative precision.

The first geographic characteristic 706 includes an indication of three attributes, arranged in a hierarchy, including a first attribute 708A at a course-level precision and a second attribute 708B at a second, finer-level, precision. The second geographic characteristic 710 includes an indication of two attributes arranged in a hierarchy including a third attribute 712A at the first coarse-level precision and a fourth attribute 712B at the second, finer-level, precision. The third geographic characteristic 714, associated with the requesting network edge device 412 includes three attributes including a fifth attribute 716A at the first coarse-level precision and a fourth attribute 716B at the second, finer-level, precision.

When selecting 310 a domain name cache 406A or 406B by comparing the third geographic characteristic 714 with the first geographic characteristic 706 and/or the second geographic characteristic 710, the system 200 may prioritise identifying a match between the finer-level precision attribute 708B of the third geographic characteristic 706 with a corresponding attribute 712B or 716B in the first geographic characteristic 710 or the second geographic characteristic 714. If a match for the finer-level precision attribute 708B is not found, then selecting a domain name cache may be dependent on a comparison of a coarser-level precision attribute 708A with the corresponding attributes 712B and 716B in the first 710 and/or second 714 geographic characteristics.

In this example, the city Austin is a finer-level precision attribute that does not match Los Angeles or Paris. As such, selecting a domain name cache may be dependent on a comparison of the coarse-level precision attribute, the country "United States", with corresponding attributes of the first 710 and second 714 geographic characteristic. In this case resulting in a match with the first geographic characteristic 710 and causing the system to select the first domain name cache 406A to send to the requesting network device 412.

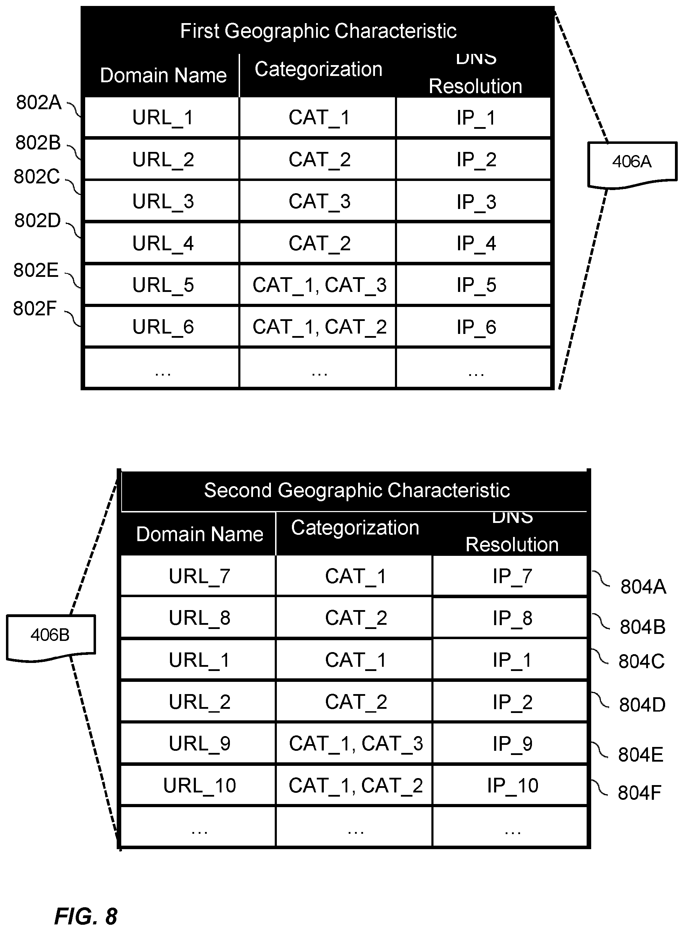

Figure 8 shows an example of the first domain name cache 406A and the second domain name cache 406B, wherein each cache 406A and 406B includes a respective plurality of records 802A to 802F and 804A to 804F. As can be seen in this example, the first domain name cache 406A and the second domain name cache 406B share two common domain names URL_1 and URL_2. It can also be seen that some domain names URL_9, URL_10, may be associated with more than category.

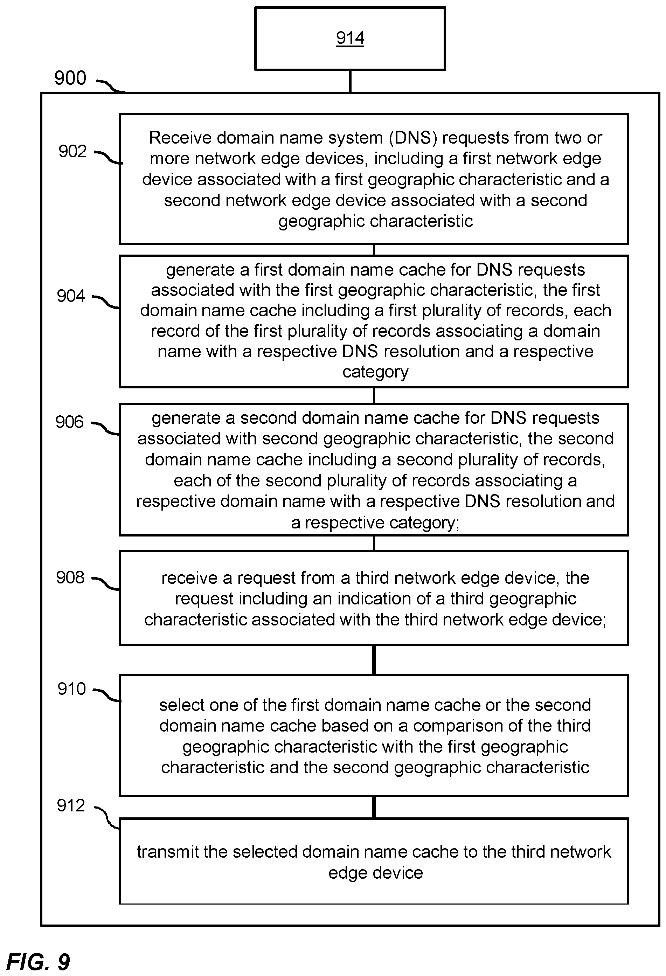

Figure 9 illustrates a schematic diagram of a non-transitory computer-readable storage medium 900. This medium is configured to store computer-executable instructions 802 to 912. When executed by a processor 914, these instructions 902 to 912 enable the implementation of the method 300 for enabling network edge devices to perform domain name categorization and filtering as described above with respect to the examples shown in Figures 3 to 8.

The above embodiments are to be understood as illustrative examples of the invention. Further embodiments of the invention are envisaged. For example, while not shown, the characteristics of the first domain name cache 406A and the second domain name cache 406B may be different. The first domain name cache 406A and the second domain name cache 460B may be of different sizes and/or suitable for provision to different type of network edge devices.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

### Numbered Clauses

The following numbered clauses described various examples of the present disclosure.
1. A system for enabling network edge devices to perform domain name categorization and filtering, the system comprising at least one processor and storage on which is stored computer-executable instructions which, when executed by the at least one processor, cause the system to:
   receive domain name system (DNS) requests from two or more network edge devices, including a first network edge device associated with a first geo-graphic characteristic and a second network edge device associated with a second geographic characteristic;
   generate a first domain name cache for DNS requests associated with the first geographic characteristic, the first domain name cache including a first plurality of records, each record of the first plurality of records associating a domain name with a respective DNS resolution and a respective category;
   generate a second domain name cache for DNS requests associated with second geographic characteristic, the second domain name cache including a second plurality of records, each of the second plurality of records associating a respective domain name with a respective DNS resolution and a respective category;
   receive a request from a third network edge device, the request including an indication of a third geographic characteristic associated with the third network edge device;
   select one of the first domain name cache or the second domain name cache based on a comparison of the third geographic characteristic with the first geographic characteristic and the second geographic characteristic; and
   transmit the selected domain name cache to the third network edge device.
2. The system of clause 1, wherein a said received DNS request includes an indication of a domain name.
3. The system of clause 1, wherein a said received DNS request includes an indication of a domain name and a respective category for the domain name.
4. The system of any one of clauses 1 to 3, wherein a said geographic characteristic includes an indication of any one or more of:
   an economic zone;
   a country;
   a state;
   a city;
   a town; or
   a custom region.
5. The system of any one of clauses 1 to 4, wherein generating the first domain name cache for DNS requests associated with the first geographic characteristic comprises:
   processing the DNS requests associated with the first geographic characteristic to identify a first plurality of domain names;
   transmitting one or more requests for domain name categorization to a domain name categorization server to determine a respective category for each of the first plurality of domain names;
   receiving categorization data including an indication of one or more DNS categories for each of the first plurality of domain names;
   transmitting one or more requests for domain name resolution to a DNS server to determine a domain name resolution for each of the first plurality of domain names;
   receiving DNS resolution data including a DNS resolution for each of the first plurality of domain names; and
   storing the first plurality of domain names in association with the respective categorization data and DNS resolution data.
6. The system of any one of clauses 1 to 5, wherein generating a second domain name cache for DNS requests associated with the second geographic characteristic comprises:
   processing the DNS requests associated with the second geographic characteristic to identify a second plurality of domain names;
   transmitting one or more requests for domain name categorization to a domain name categorization server to determine a respective category for each of the second plurality of domain names;
   receiving categorization data including an indication of one or more DNS categories for each of the second plurality of domain names;
   transmitting one or more requests for domain name resolution to a DNS server to determine a domain name resolution for each of the second plurality of domain names;
   receiving DNS resolution data including a DNS resolution for each of the second plurality of domain names; and
   storing the second plurality of domain names in association with the respective categorization data and DNS resolution data.
7. The system of any one of clauses 1 to 6, wherein if the second domain name cache comprises fewer than a predetermined number of domain names, then generating the second domain name cache further comprises selecting one or more domain names from the first plurality of domain names for inclusion in the second domain name cache.
8. The system of clause 7, wherein each of the first plurality of domain names is associated with a respective popularity score representative of a number of DNS requests including the respective domain name of the first plurality of domain names, and wherein selecting one or more domain names from the first plurality of domain names for inclusion in the second domain name cache prioritizes domain names based on their respective popularity scores.
9. The system of any one of clauses 1 to 8, wherein the DNS requests include an indication of GeoIP information associated with the respective network edge device from which they are received, and generating the first domain name cache and the second domain name cache comprises sorting the DNS requests based on a comparison of their respective GeoIP with the first geographic characteristic and the second geographic characteristic.
10. The system of any one of clauses 1 to 9, wherein if it is determined that the first geographic characteristic matches the third geographic characteristic based on the comparison, then the first domain name cache is selected for transmitting to the third network edge device.
11. The system of any one of clauses 1 to 10, wherein it is determined that the second geographic characteristic matches the third geographic characteristic based on the comparison, then the second domain name cache is selected for transmitting to the third network edge device.
12. The system of any one of clauses 1 to 11, wherein if it is determined that neither the first geographic characteristic nor the second geographic characteristic matches the third geographic characteristic, then selecting either of the first domain name cache or the second domain name cache is dependent on a similarity of the third geo-graphic characteristic with the first geographic characteristic or second geographic characteristic.
13. The system of any one of clauses 1 to 12, wherein the first geographic characteristic includes an indication of two or more attributes arranged in a hierarchy including at least a first attribute at a first coarse-level precision and a second attribute at a second finer-level precision,
   wherein the second geographic characteristic includes an indication of two or more attributes arranged in a hierarchy including at least a third attribute at the first coarse-level precision and a fourth attribute at the second finer-level precision,
   wherein the third geographic characteristic includes two or more attributes arranged in a hierarchy including a fifth attribute at the first coarse-level precision and sixth attribute at the second finer-level precision, and
   wherein if the sixth attribute does not match with either the second attribute or the fourth attribute, selecting either of the first domain name cache or the second domain name cache is dependent on a comparison of the fifth attribute with the first attribute and the third attribute.
14. A method for enabling network edge devices to perform domain name categorization and filtering, the method comprising:
   receiving domain name system (DNS) requests from two or more network edge devices, including a first network edge device associated with a first geo-graphic characteristic and a second network edge device associated with a second geographic characteristic;
   generating a first domain name cache for DNS requests associated with the first geographic characteristic, the first domain name cache including a first plurality of records, each record of the first plurality of records associating a domain name with a respective DNS resolution and a respective category;
   generating a second domain name cache for DNS requests associated with the second geographic characteristic, the second domain name cache including a second plurality of records, each of the second plurality of records associating a respective domain name with a respective DNS resolution and a respective category;
   receiving a request from a third network edge device, the request including an indication of a third geographic characteristic associated with the third network edge device;
   selecting one of the first domain name cache or the second domain name cache based on a comparison of the third geographic characteristic with the first geographic characteristic and the second geographic characteristic; and
   transmitting the selected domain name cache to the third network edge device.
15. The method of clause 14, wherein a said received DNS request includes an indication of a domain name.
16. The method of clause 14, wherein a said received DNS request includes an indication of a domain name and a respective category for the domain name.
17. The method of any one of clauses 14 to 16, wherein a said geographic characteristic includes an indication of any one or more of:
   an economic zone;
   a country;
   a state;
   a city;
   a town; or
   a custom region.
18. The method of any one of clauses 14 to 17, wherein generating the first domain name cache for DNS requests associated with the first geographic characteristic comprises:
   processing the DNS requests associated with the first geographic characteristic to identify a first plurality of domain names;
   transmitting one or more requests for domain name categorization to a domain name categorization server to determine a respective category for each of the first plurality of domain names;
   receiving categorization data including an indication of one or more categories for each of the first plurality of domain names;
   transmitting one or more requests for domain name resolution to a DNS server to determine a domain name resolution for each of the first plurality of domain names;
   receiving DNS resolution data including a DNS resolution for each of the first plurality of domain names; and
   storing the first plurality of domain names in association with the respective categorization data and DNS resolution data.
19. The method of any one of clauses 14 to 18, wherein generating the second domain name cache for DNS requests associated with the second geographic characteristic comprises:
   processing the DNS requests associated with the second geographic characteristic to identify a second plurality of domain names;
   transmitting one or more requests for domain name categorization to a domain name categorization server to determine a respective category for each of the second plurality of domain names;
   receiving categorization data including an indication of one or more categories for each of the second plurality of domain names;
   transmitting one or more requests for domain name resolution to a DNS server to determine a domain name resolution for each of the second plurality of domain names;
   receiving DNS resolution data including a DNS resolution for each of the second plurality of domain names; and
   storing the second plurality of domain names in association with the respective categorization data and DNS resolution data.
20. The method of any one of clauses 14 to 19, wherein if the second domain name cache comprises fewer than a predetermined number of domain names, then generating the second domain name cache further comprises selecting one or more domain names from the first plurality of domain names for inclusion in the second domain name cache.
21. The method of clause 20, wherein each of the first plurality of domain names is associated with a respective popularity score representative of a number of DNS requests including the respective domain name of the first plurality of domain names, and wherein selecting one or more domain names from the first plurality of domain names for inclusion in the second domain name cache prioritizes domain names based on their respective popularity scores.
22. The method of any one of clauses 14 to 21, wherein the DNS requests include an indication of GeoIP information associated with the respective network edge device from which they are received, and generating the first domain name cache and the second domain name cache comprises sorting the DNS requests based on a comparison of their respective GeoIP with the first geographic characteristics and the second geo-graphic characteristic.
23. The method of any one of clauses 14 to 22, wherein if it is determined that the first geographic characteristic matches the third geographic characteristic based on the comparison, then the first domain name cache is selected for transmitting to the third network edge device.
24. The method of any one of clauses 14 to 23, wherein it is determined that the second geographic characteristic matches the third geographic characteristic based on the comparison, then the second domain name cache is selected for transmitting to the third network edge device.
25. The method of any one of clauses 14 to 24, wherein if it is determined that neither the first geographic characteristic nor the second geographic characteristic matches the third geographic characteristic, then selecting either of the first domain name cache or the second domain name cache is dependent on a similarity of third geographic characteristic with the first geographic characteristic or second geographic characteristic.
26. The method of any one of clauses 14 to 25, wherein the first geographic characteristic includes an indication of two or more attributes arranged in a hierarchy including at least a first attribute at a first coarse-level precision and a second attribute at a second finer-level precision,
   Wherein the second geographic characteristic includes an indication of two or more attributes arranged in a hierarchy including at least a third attribute at the first coarse-level precision and a fourth attribute at the second finer-level precision,
   wherein the third geographic characteristic includes two or more attributes arranged in a hierarchy including a fifth attribute at the first coarse-level precision and sixth attribute at the second finer-level precision, and
   wherein if the sixth attribute does not match with either the second attribute or the fourth attribute, selecting either of the first domain name cache or the second domain name cache is dependent on a comparison of the fifth attribute with the first attribute and the third attribute.
27. A non-transitory computer-readable storage medium comprising computer executable instructions which, when executed by a processor, cause the processor to: receive domain name system (DNS) requests from two or more network edge devices, including a first network edge device associated with a first geographic characteristic and a second network edge device associated with a second geographic characteristic;
   generate a first domain name cache for DNS requests associated with the first geographic characteristic, the first domain name cache including a first plurality of records, each record of the first plurality of records associating a domain name with a respective DNS resolution and a respective category;
   generate a second domain name cache for DNS requests associated with second geographic characteristic, the second domain name cache including a second plurality of records, each of the second plurality of records associating a respective domain name with a respective DNS resolution and a respective category;
   receive a request from a third network edge device, the request including an indication of a third geographic characteristic associated with the third network edge device;
   select one of the first domain name cache or the second domain name cache based on a comparison of the third geographic characteristic with the first geographic characteristic and the second geographic characteristic; and
   transmit the selected domain name cache to the third network edge device.

## Claims

1. A system for enabling network edge devices to perform domain name categorization and filtering, the system comprising at least one processor and storage on which is stored computer-executable instructions which, when executed by the at least one processor, cause the system to:
receive domain name system (DNS) requests from two or more network edge devices, including a first network edge device associated with a first geo-graphic characteristic and a second network edge device associated with a second geographic characteristic;
generate a first domain name cache for DNS requests associated with the first geographic characteristic, the first domain name cache including a first plurality of records, each record of the first plurality of records associating a domain name with a respective DNS resolution and a respective category;
generate a second domain name cache for DNS requests associated with second geographic characteristic, the second domain name cache including a second plurality of records, each of the second plurality of records associating a respective domain name with a respective DNS resolution and a respective category;
receive a request from a third network edge device, the request including an indication of a third geographic characteristic associated with the third network edge device;
select one of the first domain name cache or the second domain name cache based on a comparison of the third geographic characteristic with the first geographic characteristic and the second geographic characteristic; and
transmit the selected domain name cache to the third network edge device.

2. The system of claim 1, wherein a said received DNS request includes an indication of a domain name and, optionally, a respective category for the domain name.

3. The system of claim 1 or claim 2, wherein a said geographic characteristic includes an indication of any one or more of:
an economic zone;
a country;
a state;
a city;
a town; or
a custom region.

4. The system of any one of claims 1 to 3, wherein generating the first domain name cache for DNS requests associated with the first geographic characteristic comprises:
processing the DNS requests associated with the first geographic characteristic to identify a first plurality of domain names;
transmitting one or more requests for domain name categorization to a domain name categorization server to determine a respective category for each of the first plurality of domain names;
receiving categorization data including an indication of one or more DNS categories for each of the first plurality of domain names;
transmitting one or more requests for domain name resolution to a DNS server to determine a domain name resolution for each of the first plurality of domain names;
receiving DNS resolution data including a DNS resolution for each of the first plurality of domain names; and
storing the first plurality of domain names in association with the respective categorization data and DNS resolution data.

5. The system of any one of claims 1 to 4, wherein generating a second domain name cache for DNS requests associated with the second geographic characteristic comprises:
processing the DNS requests associated with the second geographic characteristic to identify a second plurality of domain names;
transmitting one or more requests for domain name categorization to a domain name categorization server to determine a respective category for each of the second plurality of domain names;
receiving categorization data including an indication of one or more DNS categories for each of the second plurality of domain names;
transmitting one or more requests for domain name resolution to a DNS server to determine a domain name resolution for each of the second plurality of domain names;
receiving DNS resolution data including a DNS resolution for each of the second plurality of domain names; and
storing the second plurality of domain names in association with the respective categorization data and DNS resolution data.

6. The system of any one of claims 1 to 5, wherein if the second domain name cache comprises fewer than a predetermined number of domain names, then generating the second domain name cache further comprises selecting one or more domain names from the first plurality of domain names for inclusion in the second domain name cache and, optionally, wherein each of the first plurality of domain names is associated with a respective popularity score representative of a number of DNS requests including the respective domain name of the first plurality of domain names, and wherein selecting one or more domain names from the first plurality of domain names for inclusion in the second domain name cache prioritizes domain names based on their respective popularity scores.

7. A method for enabling network edge devices to perform domain name categorization and filtering, the method comprising:
receiving domain name system (DNS) requests from two or more network edge devices, including a first network edge device associated with a first geo-graphic characteristic and a second network edge device associated with a second geographic characteristic;
generating a first domain name cache for DNS requests associated with the first geographic characteristic, the first domain name cache including a first plurality of records, each record of the first plurality of records associating a domain name with a respective DNS resolution and a respective category;
generating a second domain name cache for DNS requests associated with the second geographic characteristic, the second domain name cache including a second plurality of records, each of the second plurality of records associating a respective domain name with a respective DNS resolution and a respective category;
receiving a request from a third network edge device, the request including an indication of a third geographic characteristic associated with the third network edge device;
selecting one of the first domain name cache or the second domain name cache based on a comparison of the third geographic characteristic with the first geographic characteristic and the second geographic characteristic; and
transmitting the selected domain name cache to the third network edge device.

8. The method of claim 7, wherein if the second domain name cache comprises fewer than a predetermined number of domain names, then generating the second domain name cache further comprises selecting one or more domain names from the first plurality of domain names for inclusion in the second domain name cache.

9. The method of claim 8, wherein each of the first plurality of domain names is associated with a respective popularity score representative of a number of DNS requests including the respective domain name of the first plurality of domain names, and wherein selecting one or more domain names from the first plurality of domain names for inclusion in the second domain name cache prioritizes domain names based on their respective popularity scores.

10. The method of any one of claims 7 to 9, wherein the DNS requests include an indication of GeoIP information associated with the respective network edge device from which they are received, and generating the first domain name cache and the second domain name cache comprises sorting the DNS requests based on a comparison of their respective GeoIP with the first geographic characteristics and the second geographic characteristic.

11. The method of any one of claims 7 to 10, wherein if it is determined that the first geographic characteristic matches the third geographic characteristic based on the comparison, then the first domain name cache is selected for transmitting to the third network edge device.

12. The method of any one of claims 7 to 11, wherein it is determined that the second geographic characteristic matches the third geographic characteristic based on the comparison, then the second domain name cache is selected for transmitting to the third network edge device.

13. The method of any one of claims 7 to 12, wherein if it is determined that neither the first geographic characteristic nor the second geographic characteristic matches the third geographic characteristic, then selecting either of the first domain name cache or the second domain name cache is dependent on a similarity of third geographic characteristic with the first geographic characteristic or second geographic characteristic.

14. The method of any one of claims 7 to 13, wherein the first geographic characteristic includes an indication of two or more attributes arranged in a hierarchy including at least a first attribute at a first coarse-level precision and a second attribute at a second finer-level precision,
Wherein the second geographic characteristic includes an indication of two or more attributes arranged in a hierarchy including at least a third attribute at the first coarse-level precision and a fourth attribute at the second finer-level precision,
wherein the third geographic characteristic includes two or more attributes arranged in a hierarchy including a fifth attribute at the first coarse-level precision and sixth attribute at the second finer-level precision, and
wherein if the sixth attribute does not match with either the second attribute or the fourth attribute, selecting either of the first domain name cache or the second domain name cache is dependent on a comparison of the fifth attribute with the first attribute and the third attribute.

15. A non-transitory computer-readable storage medium comprising computer executable instructions which, when executed by a processor, cause the processor to: receive domain name system (DNS) requests from two or more network edge devices, including a first network edge device associated with a first geographic characteristic and a second network edge device associated with a second geographic characteristic;
generate a first domain name cache for DNS requests associated with the first geographic characteristic, the first domain name cache including a first plurality of records, each record of the first plurality of records associating a domain name with a respective DNS resolution and a respective category;
generate a second domain name cache for DNS requests associated with second geographic characteristic, the second domain name cache including a second plurality of records, each of the second plurality of records associating a respective domain name with a respective DNS resolution and a respective category;
receive a request from a third network edge device, the request including an indication of a third geographic characteristic associated with the third network edge device;
select one of the first domain name cache or the second domain name cache based on a comparison of the third geographic characteristic with the first geographic characteristic and the second geographic characteristic; and
transmit the selected domain name cache to the third network edge device.
